# EUROPEAN PATENT SPECIFICATION

(11) **EP 2 729 794 B1**
(45) Date of publication and mention of the grant of the patent: **08.10.2014**
(21) Application number: 12737512.9
(22) Date of filing: 04.07.2012
(51) Int. Cl.: G01N 29/26, G01N 29/30, G01N 29/44, G01N 29/06

(54) **DEVICE FOR THE NON-DESTRUCTIVE INSPECTION OF A TEST OBJECT BY MEANS OF ULTRASOUND, METHOD FOR OPERATING SUCH A DEVICE AND METHOD FOR THE NON-DESTRUCTIVE INSPECTION OF A TEST OBJECT BY MEANS OF ULTRASOUND**
VORRICHTUNG ZUR ZERSTÖRUNGSFREIEN PRÜFUNG EINES PRÜFOBJEKTES MITTELS ULTRASCHALL, VERFAHREN ZUM BETRIEB EINER SOLCHEN VORRICHTUNG UND VERFAHREN ZUR ZERSTRÖRUNGSFREIEN PRÜFUNG EINES PRÜFOBJEKTS MITTELS ULTRASCHALL
DISPOSITIF D'INSPECTION NON DESTRUCTIVE D'UN OBJET À L'ESSAI AU MOYEN D'ULTRASONS, PROCÉDÉ DE FONCTIONNEMENT D'UN TEL DISPOSITIF ET PROCÉDÉ D'INSPECTION NON DESTRUCTIVE D'UN OBJET À L'ESSAI AU MOYEN D'ULTRASONS

(30) Priority: 04.07.2011 DE 102011051546
(43) Date of publication of application: 14.05.2014
(73) Proprietor: GE Sensing & Inspection Technologies GmbH, 50354 Hürth (DE)
(72) Inventor: RENZEL, Peter, 52355 Düren (DE)
(74) Representative: Picker, Madeline Margaret
(86) International application number: PCT/EP2012/063061
(87) International publication number: WO 2013/004760

(56) References cited:
- EP-A2- 2 249 152
- US-A1- 2009 320 601
- MOLES M: "Phased array ultrasonic inspection of pipe welds", TECHNICAL PAPER ; SOCIETY OF MANUFACTURING ENGINEERS (WELDING INSIGHTS CONFERENCE - 20070618 TO 20070619 - EDMONTON, AB),, vol. TP05PUB135, 18 June 2007 (2007-06-18) , pages 1-13, XP009132369,

## Description

The subject matter of the present invention is a device for the non-destructive inspection of a test object by means of ultrasound and a method for operating such a device. In particular, the invention relates to the field of ultrasound testing of inanimate test objects according to the "time corrected gain" (TCG) method, which is prescribed in many US testing specifications as a standard inspection method, for example for the inspection of pipes. The TCG method, which is generally used in pulse echo operation, is based on the knowledge that, on the one hand, the geometry of the ultrasonic beam insonified into the test object changes along the sound path, and that, on the other hand, an attenuation of the ultrasound occurs in the material of the test object. Most ultrasonic test probes commonly used today generate a focused ultrasonic beam whose diameter decreases continuously, starting from the ultrasonic test probe up to a focal point, and which continuously expands behind the focal point. As an immediate consequence, the intensity of the ultrasonic pulse that hits a discontinuity located in the structure of the test object is dependent on the distance of the discontinuity from the coupling location of the ultrasonic beam into the test object. The ultrasound intensity incident upon the discontinuity, however, directly determines the height of the maximum pulse echo that can be registered. The attenuation of the insonified ultrasound, which inevitably occurs in the material of the test object due to absorption and scattering effects, also causes a comparable effect. If the discontinuity is located behind the focal point of the ultrasonic beam in the sound path, which is the case in most testing geometries, the two effects run in the same direction. However, if the discontinuity is located before the focal point of the ultrasonic beam, the effects run in opposite directions.

The TCG method now pursues the aim of ensuring, by suitable processing of the recorded ultrasonic echoes, that the echo of an ultrasound reflector located within the volume of the test object always supplies the same echo amplitude independent from the exact position of the reflector within the material of the test object, in particular, therefore, independent from the sound path between the coupling location of the ultrasonic beam and the ultrasound reflector. For this purpose, the ultrasonic echo, which is received in a time-resolved manner, is processed with a time-dependent gain factor which compensates the two above-mentioned effects, i.e. focusing or defocusing of the insonified ultrasonic beam as well as the sound attenuation of the ultrasonic beam within the material of the test object. Thus, the processed echo amplitude of an ultrasound reflector becomes as far as is experimentally possible, independent from its exact position in the material of the test object. From the statements above it becomes clear that the time-dependent gain factor for processing the received ultrasonic echo required therefor is determined, on the one hand, by the acoustic properties of the ultrasonic test probe used, in particular by the properties of the ultrasonic beam generated by it, and on the other hand, however, also by the material of the test object. For example, the sound attenuation occurring in the material of the test object is a quantity specific to the material. Moreover, the material of the test object also determines the expansion of the ultrasonic beam in the test object. In practical use, this means that, prior to carrying out a specific testing task by means of the TCG method with an ultrasonic test probe suitable for the testing task, which is generally an obliquely insonifying test probe, a calibrating measurement must always be made in order to determine the time-dependent gain factor for the selected combination of ultrasonic test probe and material to be inspected. For this purpose, the examiner uses a testing body of known geometry which preferably consists of the material of the test object. This testing body, which is, for example, rectangular, is provided with cross bores of defined dimensions that have different distances from a coupling surface of the testing body. For the calibrating measurement, the examiner now determines, for each cross bore individually, the maximum achievable echo amplitude with the test probe selected for the testing task. For this purpose, he grows the echo signal for each individual cross bore and uses the maximum echo amplitude thus determined as a calibration point for the time-dependent gain factor to be determined. The calibrating bodies used in practical application in this case typically have four to ten, generally five or six cross bores. Since the curve of the time-dependent gain factor is theoretically known, recording a small number of reference points is generally sufficient in practice in order to be able to determine the time-dependent gain factor with sufficient accuracy. For the inspection of the test object that is carried out subsequently, the previously experimentally determined time-dependent gain factor is then automatically used by the control unit of the test equipment used for the ultrasound inspection, which consists of a test probe, a control device and a display unit as well as a device that is suitable for documenting the test result. The above-described method has long been used successfully in practice and has been described many times in the literature. By way of example, reference is made herein to the discussion of the TCG method in the technical publication "Introduction to Phased Array Ultrasonic Technology Applications", ISBN 0-9735933-0-X (2005), Chapter 2.11 (pages 61 - 66).

While the TCG method with obliquely insonifying test probes with a fixed insonification angle has long been part of the prior art, transferring the TCG method to the ultrasonic test probes with a variable insonification angle, which have become increasingly common for some time, has so far not been successful. The ultrasonic test probes with variable insonification angles are generally so-called phased array ultrasonic test probes which comprise a plurality of individually controllable ultrasonic transducers, which are arranged, for example, as a linear array next to one another. Furthermore, phased array test probes are also known which comprise a plurality of transducers that are arranged in a two-dimensional array, i.e. an array spread over a flat area. The adjustability of the insonification angle of the generated ultrasonic beam is accomplished by varying the phase position of the ultrasound signals generated by the individual transducers of the array. By introducing a controlled delay between the individual transducers of the array, a specific pivoting of the ultrasonic beam generated by the ultrasonic test probe as a whole becomes possible. Furthermore, focusing and defocusing effects can also be produced. Further details regarding the phased array test probes that have long been commonly used in non-destructive material inspection are apparent, for example, from the technical publication "Introduction to Phased Array Ultrasonic Technology Applications", ISBN 0-9735933-0-X (2005), Chapters 3.3 and 3.4 (pages 103 - 121), which was mentioned above.

The use of phased array ultrasonic devices and methods for testing of objects, in which the insonification angle is periodically varied, is known from EP 2 249 152 and US 2009/320601 for example.

In principle, it is now possible to use the TCG method, which was explained above with reference to the example of the obliquely insonifying ultrasonic test probes with a fixed insonification angle, also with phased array test probes. However, it is to be noted in this case that the properties of an ultrasonic beam emitted by a phased array test probe change if the insonification angle is varied. On the one hand, for example, the so-called "effective transducer size", i.e. the size of a single-component ultrasonic transducer of an obliquely insonifying ultrasonic test probe that would generate an equivalent ultrasonic beam in the test object, changes as a function of the insonification angle. Conversely, this means that the beam properties of the ultrasonic beam insonified into the test object by the phased array test probe change as a function of the insonification angle. This must also be taken into consideration in the TCG method when determining the time-dependent gain factor. For this purpose, a calibration could be carried out separately, for each insonification angle for which the testing task to be carried out is to be executed, in order to determine the time-dependent gain factor for this predetermined insonification angle, as discussed with respect to the example of the ultrasonic test probes with a fixed insonification angle. In practical use, however, the option of using different insonification angles, which is available due to the use of a phased array test probe for such testing tasks, leads to an enormously increased effort for the calibration of the test equipment required for preparing the actual testing task.

This is where the invention comes in, which has set itself the object of proposing a device that, by using the options of beam control available due to the phased array test probes, enables a significant reduction of the time for the calibration necessary for the application of the TCG method. In particular, the invention is to provide a method with which a driving unit of a phased array test probe can be operated in order to accomplish the above-mentioned object. Finally, it is the object of the present invention to propose a method for the non-destructive inspection of a test object by means of ultrasound by means of the TCG method that is based on the above-mentioned method.

A device according to the invention is provided for the non-destructive inspection of a test object by means of ultrasound. The device comprises a control unit provided for driving a phased array ultrasonic test probe. Furthermore, the control unit is provided for driving a display, wherein the display can be integrated into the control unit or configured as an external display device. The control unit is configured to operate the phased array test probe in the pulse echo operation. In this case, the insonification angle Θ of the phased array test probe into the test object can be controlled by the control unit. The pulse echo from the test object received by the phased array test probe is analyzed by the control unit, and the control unit generates on the display an A-scan (abscissa: time, ordinate: amplitude) or a B-scan (abscissa: time, ordinate: distance from the coupling surface) of the received pulse echo. In an advantageous development, the control unit generates an A-scan and a B-scan of the received echo parallel on the display.

According to the invention, the control unit is configured to periodically vary the insonification angle Θ about a central insonification angle 00 with the amplitude ΔΘ, which can, for example, be manually set by the user of the device or be predetermined by a testing program. During the variation of the insonification angle Θ about a central insonification angle Θ0, the control unit analyzes the pulse echoes received and determines that insonification angle Θmax at which the amplitude of the received pulse echo is at maximum. The control unit then generates an A-scan or a B-scan of the pulse echo on the display for the insonification angle Θmax determined above. Preferably, an A'-scan and a B-scan of the pulse echo are depicted parallel on the display also in this case, with the abscissas of the A-scan and the B-scan preferably being oriented parallel to one another. It is obvious to the person skilled in the art that the above-mentioned A-scan or B-scan of the pulse echo is capable of showing a single pulse echo, but will generally display the average over many pulses because the pulse echo method works with pulse repetition rates between a few tens of hertz and several thousand hertz.

The device according to the invention for example makes it easier for the person skilled in the art to carry out a calibration on a calibration body in order to prepare an inspection by means of the TCG method. Using a device configured according to the invention, the effort for the examiner for carrying out a calibration measurement on a testing body under various insonification angles Θ is reduced considerably, because the device according to the invention will always display to the examiner that echo signal as an A-scan and/or B-scan that supplies the maximum echo amplitude while the calibration, during which the position of the test probe is varied on the surface of the test object in order to optimize ("to grow") the echo signal, is being carried out. It is thus easy for the examiner to realize the optimum insonification position for carrying out a calibration on a selected reference reflector. If the A-scan and the B-scan are shown parallel, the testing task becomes even easier for the examiner because, on the one hand, he obtains a good overview over the reference reflectors disposed in the testing body via the B-scan, on the other hand, he is able to optimize the echo amplitude, i.e. grow the echo signal, using the A-scan.

The control unit according to the invention is in this case preferably configured to analyze the received pulse echo at least over one period of the angle variation in order to determine the insonification angle Θmax. The period of the angle variation is in this case advantageously between one second and fractions of a millisecond; typically, it is in the range of 100 - 500 milliseconds. The amplitude ΔΘ of the angle variation about the central insonification angle 00 can be between fractions of a degree and ten degrees, in some cases, higher amplitudes are conceivable and technically expedient. Typically, the amplitude of the angel variation ΔΘ is between one and five degrees.

In the device according to the invention, the control unit is configured to display, in the B-scan of the received pulse echo, a straight line G which represents the sound path at the insonification angle Θmax. This is advantageous in particular if a calibration is carried out on a testing body with several reference reflectors. In this case, it is not readily apparent to the examiner which of the reference reflector currently supplies the maximum pulse echo. Showing the sound path in the B-scan illustrates very nicely the "jump" of the insonification angle from one reference reflector to the next when the position of the test probe is changed on the coupling surface of the testing body.

The interpretability of a B-scan generated by the control unit is improved even more for the examiner if the amplitude of the received pulse echo is shown in a color-coded manner in the B-scan. The color-coding provides the person skilled in the art with an indication, for example when carrying out a calibration on a testing body, of whether he was successful in sufficiently optimizing the echo signals of the individual reference reflectors in the testing body.

It is a matter of course to the person skilled in the art that the special advantages resulting from the use of the phased array test probes come to bear, in connection with the present invention, particularly if the control unit of the device according to the invention is configured to permit setting a plurality of different central insonification angles Θ0. For example, this makes it possible to carry out a standardized testing task in which an inspection for flaws has to take place under oblique insonification at different predefined insonification angles.

A particularly advantageous development of the device according to the invention relates to an additionally activatable automatic amplifying device which can be provided in the control unit. The amplifying device is provided for processing the received pulse echo and configured to automatically adjust the applied gain factor in such a way that the indication height of the received pulse echo in the A-scan, in relation to the maximum available indication height, always lies in a predetermined interval. In the case of very strong or very weak echoes this facilitates "growing" the echo signal, because the examiner does not have to additionally set the gain factor g ("gain") for regulating the indication height in the A-scan in addition to manually varying the coupling location. Such an amplifying device is hereinafter referred to as AGG amplifying device. Particularly preferably, the amplifying device is operated in such a way that the applied gain factor is automatically adapted in discrete stages if the indication height of the pulse echo in the A-scan exceeds a predefined upper threshold or drops below a predefined lower threshold. It was found to be particularly advantageous if a value of 40% of the maximum indication height, preferably 50% of the maximum indication height, and particularly preferably 60% or more of the maximum indication height is selected as the lower threshold. Conversely, it was found to be particularly advantageous for the upper threshold if the upper threshold is set to a value of 80% of the maximum indication height, preferably 90% of the maximum indication height and, in a particularly preferable embodiment, 95% or more of the maximum indication height. In an advantageous embodiment of the device according to the invention, both the upper threshold as well as the lower threshold can be predefined by the user, for example by an input into the control unit.

A further improvement of the handling properties of the device according to the invention for the user can be accomplished if the user receives information on the gain factor set automatically by the automatic amplifying device. For this purpose, it can be provided that a numerical value for the currently applied gain factor is shown in the display by the control device, in particular immediately adjacent to the A-scan shown in the display, so that the examiner is able to keep an eye on both the A-scan as well as on the gain factor at the same time. Alternatively or additionally, a color-coded representation of the currently applied gain factor is also conceivable. For example, a particularly high gain factor, which suggests a bad signal quality caused, for example, by poor acoustic coupling of the probe, can be symbolized by a red signal. Conversely, a particularly low gain factor, which suggests a good signal quality, in particular a good acoustic coupling of the test object, can be symbolized by a green color. In particular, it is possible to combine the above-mentioned numerical display of the currently applied gain factor with a color-coded representation, for example by additionally displaying the alphanumerical characters for displaying the gain factor in different colors, depending on the size of the gain factor.

While the detection of flaws, particularly of reference flaws, as well as the growing of flaw signals is advantageously carried out with automatic gain adaptation, i.e. with an activated automatic amplifying device, the actual (frequently quantitative) calibration or testing measurement can generally only be carried out with a fixed gain factor of the amplifying device. For this reason, it is provided in an advantageous embodiment of the device according to the invention that the automatic amplifying device can either be switched off or can optionally be operated with an automatically set gain factor or with a constant gain factor. In this case, the operation mode of the amplifying device can advantageously be set by the user on the control unit.

In order to be able now to carry out testing tasks in accordance with the TCG method with the device according to the invention, the control unit advantageously comprises a further amplifying device for the recorded pulse echo, which is configured to apply a time-dependent gain factor, so that the indication height of the received pulse echo of a standardized flaw in the A-scan is constant, substantially irrespective of its position in the test object. This further amplifying device is hereinafter referred to as TCG amplifying device. In this case, the point in time at which a testing pulse is insonified into the test object is to be considered the starting point for the time-dependent gain factor. An echo pulse originating from this testing pulse is then amplified with a time-dependent gain factor in accordance to its response time. Because today's devices for the non-destructive material inspection by means of ultrasound generally comprise a unit for digital signal processing, the time-dependent gain factor is, in practical use, advantageously used within the context of digital signal processing. In principle, however, the application of a time-dependent gain factor is also conceivable and technically possible in an analogous amplifier stage.

Furthermore, the above invention relates to a method for operating a device for the non-destructive inspection of a test object by means of ultrasound according to claim 12.

The phased array test probe can in this case advantageously be a test probe with a transducer that is divided into 8, 16, 32, 64 or 128 transducer elements that are arranged as a linear array and that can be driven individually or in groups. Typical insonification angles while working in oblique insonification are between 35° and 75°, depending on the specific testing task and the material of the test object. The insonification angles are frequently prescribed by testing standards. The pulse repetition rate in pulse echo operation is typically between a few tens of hertz and some kilohertz, preferably in the range between 50 hertz and one kilohertz. The variation period of the insonification angle Θ and preferred angle ranges for the amplitude ΔΘ of the angle variations have already been specified above in connection with the device according to the invention; reference is made thereto.

Within the context of the method according to the invention, the received pulse echo is analyzed at least over one period of the angle variation in order to determine the insonification angle Θmax. Preferably, however, an averaging can be carried out over a few to a few tens or hundreds of periods of the angle variation. Reference is made also in this case to the statements in connection with the device according to the invention.

The application of an automatic gain factor, such as it was described above in connection with the optional AGG amplifying device of the device according to the invention, for the purpose of ensuring an indication height in the A-scan within a predefined interval between a lower threshold and an upper threshold is of particular advantage also within the context of the method according to the invention, and thus constitutes an advantageous development of the method. This also applies to the graphical representation of the automatically applied gain factor on the display as, for example, an alphanumerical value or/and a color code, as was already described in connection with the device according to the invention.

Finally, for carrying out a practical testing task, it is also particularly advantageous within the context of the method according to the invention, if a time-dependent gain factor is used for processing the received echo signal, which allows for effects as described in the introductory part, namely of focusing or defocusing of the ultrasonic beam propagating in the test object and of sound attenuation by scattering or the change of the beam geometry within the test object as the insonification angle is changed. The introduction of such a time-dependent gain factor exactly corresponds to the basic idea of the TCG method explained in the introduction. As was already explained above, the application of such a gain factor is of particular advantage also in connection with the method according to the invention. It is obvious to the person skilled in the art that generally the application of the indicated features of the device according to the invention in accordance with the method is advantageous for solving the underlying object, and is also covered by the disclosure of this application.

Further advantages and features of the device according to the invention and the method according to the invention as well as the execution of the specific testing task by means of the TCG method are apparent from the exemplary embodiment, which is explained in more detail below with reference to the drawing. The latter shows in:

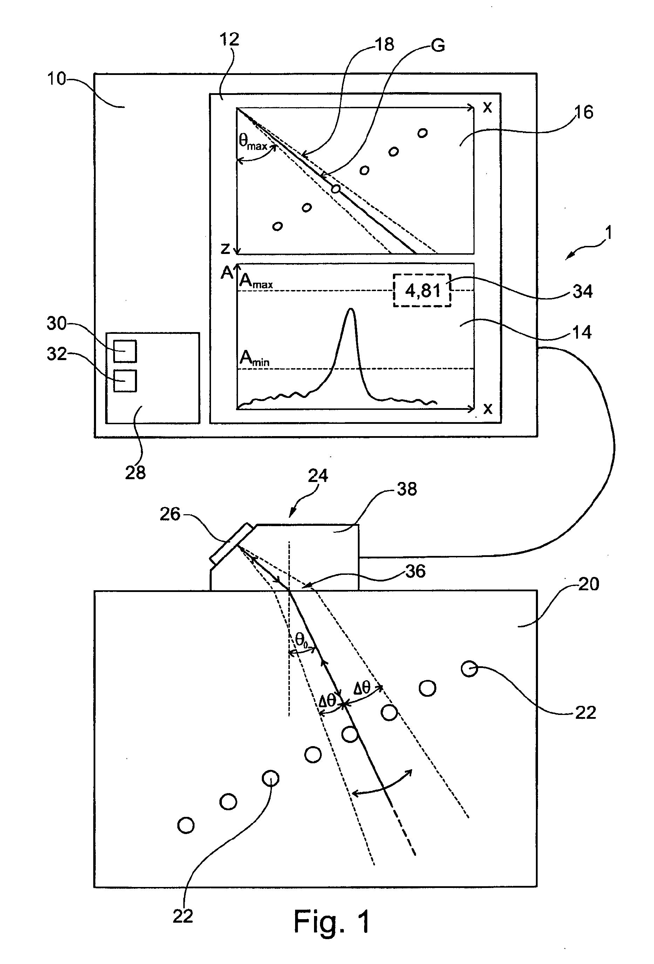

- Fig. 1:: a schematic representation of an exemplary embodiment of a device according to the invention.

The testing device 1 shown in Figure 1 comprises a control unit 10 to which a test probe 24 is connected in an electrically conductive manner. The test probe 24 comprises an ultrasonic transducer 26 which is mounted on a leading body 38 that can consist, for example, of Plexiglas®. The ultrasonic transducer 26 consists of a plurality of transducer elements that can be driven independently from one another and which are arranged as a linear array. The array can comprise, for example, 64 independent transducer elements.

The control unit 10 connected in an electrically conductive manner to the test probe 24 is configured to drive the test probe 24 to emit ultrasonic signals as well as record by means of the test probe 24 ultrasonic signals returning out of the test probe and process them. For this purpose the control unit 10 comprises a driving unit that is not shown in Figure 1, which can be configured, in particular, to operate the test probe 24 in the pulse echo mode. In this mode, the test probe 24 emits a sequence of high-frequency ultrasonic pulses which typically are coupled into a test object in oblique insonification via the leading body 38 of the test probe 24. The usual pulse frequency lies in the range of a few megahertz, the pulse sequence frequency is typically a few tens of hertz to a few 1000 hertz. The driving unit is furthermore configured to drive the transducer elements of the transducer 26 individually with a defined phase position so that the transducer 26 forms a phased array. In this way, controlling the ultrasonic beam generated by the test probe 24 is possible. On the one hand, the shape of the beam can be influenced; in this case, for example, the position of a focal point; on the other hand, a pivoting of the ultrasonic beam as a whole is also possible so that the insonification angle of the test probe 24 into the test object can be varied. The driving unit is configured in such a way that the examiner can specifically set the insonification angle into a material known to him.

The control unit 10 furthermore includes a display 12 on which an A-scan 14 and a B-scan 16 of the test object are displayed, arranged one on top of the other in the exemplary embodiment shown. In the selected arrangement, the abscissas are disposed parallel to one another. In the exemplary embodiment shown, a testing body 20, which consists, for example, of a rectangular steel block of a known type of steel, serves as the test object. A plurality of standard reflectors in the form of reference flaws 22, which consist of blind holes with a known cylindrical cross section, is introduced into the one lateral surface of the testing body 20. All of these reference flaws 22 have the same dimensions and the same orientation, so that in principle, they should result in the same flaw size in an inspection by means of the TCG method. The testing body 20 shown in Figure 1 is provided especially for recording a time-dependent gain curve for carrying out an ultrasound inspection in accordance with the TCG method on a test object. In this case, the material of the testing body 20 preferably matches the material of the test object.

In order to carry out a calibration on the testing body 20, the examiner places the test probe 24 on the top cover surface of the testing body 20 while providing for good acoustic coupling of the coupling surface of the test probe 24 to the testing body 20 by using a suitable coupling agent. Then, he puts the control unit 10 into a first operating mode by the control unit 10 driving the test probe 24 to emit a pulse sequence, with the examiner preselecting a central insonification angle 00. In order to carry out the method according to the invention, the actual insonification angle Θ is now periodically varied about the central insonification angle Θ0 by the driving unit in the control unit 10, wherein the amplitude ΔΘ of this variation can also be preset by the examiner. Variation amplitudes ΔΘ between 1 degree and 15 degrees have proven themselves. Due to the fact that the insonification angle is periodically varied about the central angle Θ0, the ultrasonic beam sweeps over a volume within the testing body 20 which is significantly more extensive than the dimensions of the ultrasonic beam coupled into the testing body 20.

The transducer 26 in the test probe 24 is operated as an ultrasonic receiver parallel thereto. This means that the echo signals reflected back into the test probe 24 or the transducer 26 are recorded by the transducer 26 and converted into electrical signals. They are preamplified and transmitted to an evaluation unit 28 implemented in the control unit 10. By suitably designing the evaluation unit 28, the receiving angle can be predetermined, for example, at which the echo signal has to hit the coupling surface 36 of the test probe 24 in order for the signal to be recorded by the transducer 26. It can thus be ensured, for example, that only those echo signals that originate from the ultrasonic pulses insonified into the testing body 20 at an insonification angle Θ1 are actually received by the test probe 24.

The evaluation unit 28 is configured to analyze the echo signals recorded by the test probe 24 in order to determine that insonification angle Θmax at which the amplitude of the received pulse echo is at maximum. In this case, averaging is advantageously carried out in the evaluation of the received echo signals over a plurality of pulse echoes. Preferably, the angle variation takes place while the coupling location remains substantially constant, i.e. the position of the test probe 24 on the testing body 20 remains substantially constant. The displacement of the coupling location accompanying the electronic angle variation can optionally be compensated electronically, e.g. by changing the transmission aperture, i.e. the position of the transmitting transducer elements, in order to increase accuracy. Furthermore, the evaluation unit 28 is configured to generate, for the determined insonification angle Θmax for which the amplitude of the received pulse echo is at maximum, an A-scan and parallel a B-scan of the received (averaged) echo signal for this maximum insonification angle Θmax on the display 12, as this is apparent from Figure 1. Since the A-scan always only depicts the echo signal for this signal Θmax, it is easy for the examiner to optimize, i.e. to "grow", the flaw signal. If the ultrasonic beam insonified into the testing body 20 detects one (or more) reference flaws 22, a back reflection is shown in the A-scan for that insonification angle Θ1 for which the maximum echo amplitude results. The entire reference flaw 22 can be measured by means of a mechanical change of the insonification location, i.e. a displacement of the test probe 24 on the coupling surface of the testing body 20. A spatially resolved distribution of the echo amplitude, namely of the distance between the coupling location and the reference flaws in the plane of the coupling surface (abscissa X) as well as of the depth of the reference flaw 22 in the testing body 20, i.e. the distance of the reference flaw 22 from the coupling surface of the testing body 20 (abscissa Z) is obtained. As is known from the prior art, the spatially resolved flaw amplitude is in this case advantageously shown in a color-coded or grayscale-coded manner in the B-scan. If the evaluation unit 28 is equipped with a memory medium, a B-scan of the entire body can thus be recorded by specifically moving towards the individual reference values 22 in the testing body 20.

In addition, a so-called AGC unit, which can be manually switched on and off by the operator of the control unit 10, is integrated into the evaluation unit 28 as a first amplifying device 30. The AGC unit 30 is configured to ensure, by automatically adapting the gain factor g, that the maximum echo amplitude registered at the angle Θmax always remains within predefined upper and lower thresholds in the A-scan 14. In this case, both the lower threshold A-Min as well as the upper threshold A-Max can be selected by the operator of the control unit 10. For example, a value of 95% of the maximum indication height in the A-scan 14 has proved itself as the upper threshold A-Max. For example, a value of 60% of the maximum indication height has proved advantageous as the lower threshold A-Min. If the AGC unit 30 now finds that the maximum echo amplitude in the A-scan 14 drops below the value A-Min, then the applied gain factor is increased in stages until the lower threshold A-Min is exceeded by a defined quantity. Then, the gain factor g is fixed to the new determined value. If, however, it is registered that the threshold A-Max is exceeded, the AGC unit 30 reduces the applied gain factor g in steps until the upper threshold A-Max is underrun by a predefined amount. The gain factor g is in this case also then fixed to the determined value. If the AGC unit 30 is activated, it is particularly easy for the examiner to grow an echo signal, because he does not have to ensure, while growing the echo signal, that the Echo signal remains visible in the A-scan 14. The AGC unit 30 automatically provides for this. Additionally, the gain factor g applied automatically by the AGC unit 30 is numerically represented in the A-scan 14 in the exemplary embodiment shown. For this purpose, a gain indicator 34 is implemented in the A-scan 14 for this purpose, which indicates a numerical value for the automatically set gain factor g. Furthermore, the numerical value shown in the gain indicator 34 is shown in different colors, for example to symbolize that a particularly good or a particularly poor signal quality is given.

As another aid for the examiner, a cursor 18 in the form of a straight line G is inserted into the B-scan 16 which indicates the sound propagation direction (the insonification angle) in the testing body 20 at which the maximum echo amplitude is obtained.

In order to carry out, by means of the method according to the invention, a calibration for determining a time-dependent gain factor for the preparation of an ultrasound inspection of a test object by means of the TCG method, an ultrasonic beam is coupled in by means of the test probe 24 at an insonification angle Θ0 set by the examiner. By varying the coupling location on the coupling surface of the testing body 20, the examiner now locates the echo signal of a first reference flaw 22. By means of the method according to the invention, the examiner grows the echo signal of this reference flaw 22 in order to determine the maximum echo amplitude of the reference flaw. Using the method according to the invention, it is possible, in particular, to detect the maximum echo amplitude for the reference flaw 22 irradiated with sound for a plurality of different insonification angles Θ. For example, the automatic angle variation by means of the driving unit can be switched off for their quantitative determination, so that the quantitative determination is carried out at the fixed angle Θ0. Alternatively, the work can also be carried out with an activated angle variation so that the registered maximum echo amplitude can occur both at the angle Θ0 as well as at angles deviating therefrom. Advantageously, an inspection routine, which checks whether the registered maximum echo amplitude was registered at the preset angle Θ0, is implemented in the evaluation unit. If there is such a measurement value, the routine, for example, can output a visual or acoustic signal for the operator of the device.

This process sequence is repeated at several other reference flaws 22 in the testing body 20. For a given insonification angle Θ0, this supplies the echo amplitudes of identical reference flaws 22 that are located at different depths in the testing body 20. These experimentally determined values can then be used for the determination of a time-dependent gain curve that is specific to the material of the testing body 20, the test probe 24 used, as well as to the selected insonification angle Θ0. This time-dependent gain curve can then be stored in a second amplifying device 32, which is also referred to as a TCG unit and can be integrated, for example, into the evaluation unit 28, and subsequently applied when the ultrasound inspection is carried out in accordance with the TCG method.

### Reference numerals

- 1: Device
- 10: Control unit
- 12: Display
- 14: A-Scan
- 16: B-Scan
- 18: Cursor
- 20: Testing body
- 22: Reference flaw
- 24: Test probe
- 26: Transducer
- 28: Evaluation unit
- 30: First amplifying device (AGC unit)
- 32: Second amplifying device (TCG unit)
- 34: Gain indicator
- 36: Coupling surface
- 38: Leading body
- g: Gain factor

## Claims

1. Device (1) for the non-destructive inspection of a test object by means of ultrasound, comprising a control unit (10) provided for driving a phased array ultrasonic test probe (24) and a display (12), wherein the control unit (10) is configured
a. to operate the phased array test probe (24) in the pulse echo operation and to control the insonification angle Θ of the phased array test probe (24) into the test object,
b. to analyze the pulse echo from the test object received by the phased array test probe (24), and
c. to show an A-scan (14) or/and a B-scan (16) of a received pulse echo
on the display (12),
wherein the control unit (10) is further configured
d. to periodically vary the insonification angle Θ about a central insonification angle Θ0,
e. to determine the insonification angle Θmax at which the amplitude of the received pulse echo is at maximum, and
f. to show an A-scan (14) and a B-scan (16) of the pulse echo on the display (12) for the insonification angle Θmax
**characterized in that**
g. the control unit (10) is configured to display, in the B-scan (16) of the received pulse echo, a straight line G which represents the sound path at the insonification angle Θmax.

2. Device (1) according to claim 1, **characterized in that** the control unit (10) is configured to analyze the received pulse echo at least over one period of the angle variation in order to determine the insonification angle Θmax.

3. Device (1) according to claim 1, **characterized in that** the control unit (10) is configured arrange the abscissas of the A-scan (14) and the B-scan (16) of the received pulse echo parallel on the display (12).

4. Device (1) according to claim 1, **characterized in that** the control unit (10) is configured to display, in the B-scan (16) of the received pulse echo, the amplitude of the pulse echo in a color-coded manner.

5. Device (1) according to claim 1, **characterized in that** the control unit (10) comprises a housing into which the display (12) is integrated.

6. Device (1) according to claim 1, **characterized in that** the control unit (10) is configured to permit the setting of a plurality of different central insonification angles Θ0.

7. Device (1) according to claim 1, **characterized in that** the control unit (10) comprises a first amplifying device (30) for the received pulse echo, which is configured to automatically adjust the applied gain factor g in such a way that the indication height of the received pulse echo in the A-scan (14), in relation to the maximum available indication height, always lies in a predetermined interval.

8. Device (1) according to claim 7, **characterized in that** the indication height is at least 40% of the maximum indication height, preferably at least 50%, and particularly preferably at least 60%.

9. Device (1) according to claim 7, **characterized in that** the indication height is maximally 80% of the maximum indication height, preferably maximally 90%, and particularly preferably maximally 95%.

10. Device (1) according to claim 7, **characterized in that** the automatic amplifying device (30) can optionally be operated with an automatically set gain factor g or with a constant gain factor g.

11. Device (1) according to claim 1, **characterized in that** the control unit (10)
comprises a second amplifying device (32) for the recorded pulse echo, which is configured to apply a time-dependent gain factor, so that the indication height of the received pulse echo of a standardized flaw in the A-scan (14), irrespective of its position in the test object, is substantially constant.

12. Method for operating a device (1) for the non-destructive inspection of a
test object by means of ultrasound, the device (1) comprising a phased array ultrasonic test probe (24) and a control unit (10) which is provided for driving the phased array ultrasonic test probe (24) and a display (12), the method comprising the following method steps:
a. operating the phased array test probe (24) in oblique insonification in pulse echo operation, wherein the insonification angle Θ of the phased array test probe (24) into the test object is controllable,
b. analyzing the (24) received pulse echoes from the test object,
c. periodically varying the insonification angle Θ about a central insonification angle Θ0,
d. determining the insonification angle Θmax at which the amplitude of the received pulse echo is at maximum, and
e. generating an A-scan (14) and a B-scan (16) of the received pulse echo for the insonification angle Θmax on the display (12), **characterized by** the following additional method steps:
f. a straight line G, which represents the sound path at the insonification
angle Θmax, is displayed in the B-scan (16) of the received pulse echo.

13. Method according to claim 12, **characterized in that** the received pulse
echo is analyzed at least over one period of the angle variation in order to determine the insonification angle Θmax.

14. Method according to claim 12, **characterized in that** the amplitude of the
pulse echo is displayed in a color-coded manner in the B-scan (16) of the received pulse echo.

15. Method for the non-destructive inspection of a test object by means of ultrasound in accordance with the TCG method using a phased array ultrasonic test probe (24), comprising the following method steps:
a. coupling an ultrasonic beam at an insonification angle 00 into a testing body (20),
b. irradiating with sound a standard reflector (22) disposed in the testing body (20) and locating the echo signal originating from the first standard reflector (22),
c. applying the method according to claim 13,
d. growing the echo signal originating from the standard reflector (22) that was irradiated with sound,
e. determining the maximum signal amplitude Amax of the echo signal,
f. repeating the preceding method steps on at least one second standard reflector (22),
g. determining a time-dependent gain factor for the combination of the
phased array test probe 24 used, the material of the testing body 20, and the insonification angle Θ.

## Patentansprüche

1. Vorrichtung (1) zur zerstörungsfreien Untersuchung eines Prüfgegenstandes mit Hilfe von Ultraschall, die eine Steuereinheit (10) umfasst, die zum Ansteuern einer Ultraschall-Gruppenstrahler-Prüfsonde (24) und einer Anzeige (12) bereitgestellt wird, wobei die Steuereinheit (10) dafür konfiguriert ist,
a. die Gruppenstrahler-Prüfsonde (24) im Impulsechobetrieb zu betreiben und den Beschallungswinkel Θ der Gruppenstrahler-Prüfsonde (24) in den Prüfgegenstand zu steuern,
b. das durch die Gruppenstrahler-Prüfsonde (24) empfangene Impulsecho von dem Prüfgegenstand zu analysieren und
c. einen A-Scan (14) und/oder einen B-Scan (16) eines empfangenen Impulsechos auf der Anzeige (12) anzuzeigen,
wobei die Steuereinheit (10) ferner dafür konfiguriert ist,
d. den Beschallungswinkel Θ periodisch um einen zentralen Beschallungswinkel Θ0 zu variieren,
e. den Beschallungswinkel Θmax zu bestimmen, bei dem sich die Amplitude des empfangenen Impulsechos beim Maximum befindet, und
f. einen A-Scan (14) und/oder einen B-Scan (16) des Impulsechos für den Beschallungswinkel Θmax auf der Anzeige (12) anzuzeigen,
**dadurch gekennzeichnet, dass**
g. die Steuereinheit (10) dafür konfiguriert ist, in dem B-Scan (16) des empfangenen Impulsechos eine gerade Linie G anzuzeigen, die den Schallweg bei dem Beschallungswinkel Θmax darstellt.

2. Vorrichtung (1) nach Anspruch 1, **dadurch gekennzeichnet, dass** die Steuereinheit (10) dafür konfiguriert ist, das empfangene Impulsecho wenigstens über eine Periode der Winkelvariation zu analysieren, um den Beschallungswinkel Θmax zu bestimmen.

3. Vorrichtung (1) nach Anspruch 1, **dadurch gekennzeichnet, dass** die Steuereinheit (10) dafür konfiguriert ist, die Abszissen des A-Scans (14) und des B-Scans (16) des empfangenen Impulsechos parallel auf der Anzeige (12) anzuordnen.

4. Vorrichtung (1) nach Anspruch 1, **dadurch gekennzeichnet, dass** die Steuereinheit (10) dafür konfiguriert ist, in dem B-Scan (16) des empfangenen Impulsechos die Amplitude des Impulsechos auf eine farbcodierte Weise anzuzeigen.

5. Vorrichtung (1) nach Anspruch 1, **dadurch gekennzeichnet, dass** die Steuereinheit (10) ein Gehäuse umfasst, in das die Anzeige (12) integriert ist.

6. Vorrichtung (1) nach Anspruch 1, **dadurch gekennzeichnet, dass** die Steuereinheit (10) dafür konfiguriert ist, das Festsetzen von mehreren unterschiedlichen zentralen Beschallungswinkeln Θ0 zu ermöglichen.

7. Vorrichtung (1) nach Anspruch 1, **dadurch gekennzeichnet, dass** die Steuereinheit (10) eine erste Verstärkungsvorrichtung (30) für das empfangene Impulsecho umfasst, die dafür konfiguriert ist, den angewendeten Verstärkungsfaktor g automatisch auf eine solche Weise einzustellen, dass die Anzeigehöhe des empfangenen Impulsechos in dem A-Scan (14), im Verhältnis zu der maximal verfügbaren Anzeigehöhe, immer in einem vorbestimmten Intervall liegt.

8. Vorrichtung (1) nach Anspruch 7, **dadurch gekennzeichnet, dass** die Anzeigehöhe wenigstens 40 % der maximalen Anzeigehöhe, vorzugsweise wenigstens 50 % und insbesondere wenigstens 60 % beträgt.

9. Vorrichtung (1) nach Anspruch 7, **dadurch gekennzeichnet, dass** die Anzeigehöhe höchstens 80 % der maximalen Anzeigehöhe, vorzugsweise höchstens 90 % und insbesondere höchstens 95 % beträgt.

10. Vorrichtung (1) nach Anspruch 7, **dadurch gekennzeichnet, dass** die automatische Verstärkungsvorrichtung (30) wahlweise mit einem automatisch festgesetzten Verstärkungsfaktor g oder mit einem konstanten Verstärkungsfaktor g betrieben werden kann.

11. Vorrichtung (1) nach Anspruch 1, **dadurch gekennzeichnet, dass** die Steuereinheit (10) eine zweite Verstärkungsvorrichtung (32) für das aufgezeichnete Impulsecho umfasst, die dafür konfiguriert ist, einen zeitabhängigen Verstärkungsfaktor anzuwenden, so dass die Anzeigehöhe des empfangenen Impulsechos eines standardisierten Fehlers in dem A-Scan (14), ungeachtet seiner Position in dem Prüfgegenstand, im Wesentlichen konstant ist.

12. Verfahren zum Betreiben einer Vorrichtung (1) zur zerstörungsfreien Untersuchung eines Prüfgegenstandes mit Hilfe von Ultraschall, wobei die Vorrichtung (1) eine Ultraschall-Gruppenstrahler-Prüfsonde (24) und eine Steuereinheit (10), die zum Ansteuern der Ultraschall-Gruppenstrahler-Prüfsonde (24) und einer Anzeige (12) bereitgestellt wird, umfasst, wobei das Verfahren die folgenden Verfahrensschritte umfasst:
a. das Betreiben der Gruppenstrahler-Prüfsonde (24) in schräger Beschallung im Impulsechobetrieb, wobei der Beschallungswinkel Θ der Gruppenstrahler-Prüfsonde (24) in den Prüfgegenstand steuerbar ist,
b. das Analysieren der (24) von dem Prüfgegenstand empfangenen Impulsechos,
c. das periodische Variieren des Beschallungswinkels Θ um einen zentralen Beschallungswinkel Θ0,
d. das Bestimmen des Beschallungswinkels Θmax, bei dem sich die Amplitude des empfangenen Impulsechos beim Maximum befindet, und
e. das Erzeugen eines A-Scans (14) und eines B-Scans (16) des empfangenen Impulsechos für den Beschallungswinkel Θmax auf der Anzeige (12),
**gekennzeichnet durch** die folgenden zusätzlichen Verfahrensschritte:
f. eine gerade Linie G, die den Schallweg bei dem Beschallungswinkel Θmax darstellt, wird in dem B-Scan (16) des empfangenen Impulsechos angezeigt.

13. Verfahren nach Anspruch 12, **dadurch gekennzeichnet, dass** das empfangene Impulsecho wenigstens über eine Periode der Winkelvariation analysiert wird, um den Beschallungswinkel Θmax zu bestimmen.

14. Verfahren nach Anspruch 12, **dadurch gekennzeichnet, dass** die Amplitude des Impulsechos in dem B-Scan (16) des empfangenen Impulsechos auf eine farbcodierte Weise angezeigt wird.

15. Verfahren zur zerstörungsfreien Untersuchung eines Prüfgegenstandes mit Hilfe von Ultraschall entsprechend dem TCG-Verfahren, unter Verwendung einer Ultraschall-Gruppenstrahler-Prüfsonde (24), das die folgenden Verfahrensschritte umfasst:
a. das Koppeln eines Ultraschallstrahls mit einem Beschallungswinkel Θ0 in einen Prüfkörper (20),
b. das Bestrahlen eines Standardreflektors (22), der in dem Prüfkörper (20) angeordnet ist, mit Schall und das Lokalisieren des Echosignals, das von dem ersten Standardreflektor (22) stammt,
c. das Anwenden des Verfahrens nach Anspruch 13,
d. das Anwachsenlassen des Echosignals, das von dem ersten Standardreflektor (22) stammt, der mit Schall bestrahlt wurde,
e. das Bestimmen der maximalen Signalamplitude Amax des Echosignals,
f. das Wiederholen der vorangegangenen Verfahrensschritte an wenigstens einem zweiten Standardreflektor (22),
g. das Bestimmen eines zeitabhängigen Verstärkungsfaktors für die Kombination der verwendeten Gruppenstrahler-Prüfsonde 24, des Materials des Prüfkörpers 20 und des Beschallungswinkels Θ.

## Revendications

1. Dispositif (1) pour l'inspection non destructrice d'un objet test au moyen d'ultrasons, comprenant une unité de contrôle (10) prévue pour entraîner une sonde de test ultrasonique à alignement phasé (24) et un afficheur (12), dans lequel l'unité de contrôle est configurée
a. pour faire fonctionner la sonde de test à alignement phasé (24) dans le mode opératoire d'impulsion-écho et pour contrôler l'angle d'insonification Θ de la sonde de test à alignement phasé (24) dans l'objet test,
b. d'analyser l'impulsion-écho de l'objet test reçue de la sonde de test à alignement phasé (24), et
c. de montrer un A-scan (14) et/ou un B-scan (16) d'une impulsion-écho
reçue sur l'afficheur (12),
dans lequel l'unité de contrôle (10) est en outre configurée
d. pour faire varier de manière périodique l'angle d'insonification Θ autour d'un angle d'insonification central Θ0,
e. pour déterminer l'angle d'insonification Θmax auquel l'amplitude de l'impulsion-écho reçue est maximale, et
f. pour montrer un A-scan (14) et un B-scan (16) de l'impulsion-écho sur
l'afficheur (12) pour l'angle d'insonification Θmax **caractérisé en ce que**
g. l'unité de contrôle (10) est configurée pour afficher, dans le B-scan (16) de l'impulsion-écho reçue, une ligne droite G qui représente la trajectoire du son à l'angle d'insonification Θmax.

2. Dispositif (1) selon la revendication 1, **caractérisé en ce que** l'unité de contrôle (10) est configurée pour analyser l'impulsion-écho au moins sur une période de variation d'angle pour déterminer l'angle d'insonification Θmax.

3. Dispositif (1) selon la revendication 1, **caractérisé en ce que** l'unité de contrôle (10) est configurée pour arranger en parallèle sur l'afficheur (12) les abscisses des A-scan (14) et B-scan (16) de l'impulsion-écho reçue.

4. Dispositif (1) selon la revendication 1, **caractérisé en ce que** l'unité de contrôle (10) est configurée pour afficher, dans le B-scan (16) de l'impulsion-écho reçue, l'amplitude de l'impulsion-écho selon un code de couleur.

5. Dispositif (1) selon la revendication 1, **caractérisé en ce que** l'unité de contrôle (10) comprend un boitier dans lequel l'afficheur (12) est intégré.

6. Dispositif (1) selon la revendication 1, **caractérisé en ce que** l'unité de contrôle (10) est configurée pour permettre l'établissement d'une pluralité de différents angles d'insonification centraux 00.

7. Dispositif (1) selon la revendication 1, **caractérisé en ce que** l'unité de contrôle (10) comprend un premier dispositif d'amplification (30) pour l'impulsion-écho reçue, qui est configuré pour ajuster automatiquement le facteur de gain g appliqué de telle façon que la hauteur de l'indication de l'impulsion-écho reçue dans le A-scan (14), en relation à la hauteur de l'indication maximale existante, se trouve toujours dans un intervalle prédéterminé.

8. Dispositif (1) selon la revendication 7, **caractérisé en ce que** la hauteur de l'indication est de au moins 40% de la hauteur de l'indication maximale, de préférence au moins 50%, et particulièrement de préférence au moins 60%.

9. Dispositif (1) selon la revendication 7, **caractérisé en ce que** la hauteur de l'indication est au maximum de 80% de la hauteur de l'indication maximale, de préférence au maximum de 90%, et de manière particulièrement préférée au maximum de 95%.

10. Dispositif (1) selon la revendication 7, **caractérisé en ce que** le dispositif d'amplification automatique (30) peut optionnellement fonctionner au moyen d'un facteur de gain g fixé automatiquement ou avec un facteur de gain g constant.

11. Dispositif (1) selon la revendication 1, **caractérisé en ce que** l'unité de contrôle (10) comprend un deuxième dispositif d'amplification (32) pour l'impulsion-écho enregistrée, qui est configuré pour appliquer un facteur de gain dépendant du temps, de telle manière que la hauteur de l'indication de l'impulsion-écho reçue d'un défaut standardisé dans le A-scan (14) est substantiellement constant, indépendamment de sa position dans l'objet test.

12. Méthode pour faire fonctionner un dispositif (1) pour l'inspection non destructrice d'un objet test au moyen d'ultrasons, le dispositif (1) comprenant une sonde de test ultrasonique à alignement phasé (24) et une unité de contrôle (10) qui est prévue pour entraîner la sonde de test ultrasonique à alignement phasé (24) et un afficheur (12), la méthode comprenant les étapes de méthode suivantes :
a. faire fonctionner la sonde de test à alignement phasé (24) dans un mode opératoire d'impulsion-écho en insonification oblique, dans lequel on peut contrôler l'angle d'insonification Θ de la sonde de test à alignement phasé (24) dans l'objet test,
b. analyser les (24) impulsions-écho reçues de l'objet test,
c. faire varier de manière périodique l'angle d'insonification Θ autour d'un angle d'insonification central 00,
d. déterminer l'angle d'insonification Θmax auquel l'amplitude de l'impulsion-écho reçue est maximale, et
e. générer sur l'afficheur (12) un A-scan (14) et un B-scan (16) de l'impulsion-écho reçue pour l'angle d'insonification Θmax, **caractérisée par** les étapes de méthode additionnelles suivantes :
f. une ligne droite G, qui représente la trajectoire du son à l'angle d'insonification Θmax est affichée au B-scan (16) de l'impulsion-écho reçue.

13. Méthode selon la revendication 12, **caractérisée en ce que** l'impulsion-écho reçue est analysée au moins sur une période de variation d'angle pour déterminer l'angle d'insonification Θmax.

14. Méthode selon la revendication 12, **caractérisée en ce que** l'amplitude de l'impulsion-écho reçue est affichée selon un code de couleur dans le B-scan (16) de l'impulsion-écho reçue.

15. Méthode pour l'inspection non destructrice d'un objet test au moyen d'ultrasons selon la méthode TCG utilisant une sonde de test ultrasonique à alignement phasé (24), comprenant les étapes de méthode suivantes :
a. on couple un faisceau ultrasonique à un angle d'insonification Θ0 dans un corps de test (20),
b. on irradie de son un réflecteur standard (22) disposé dans le corps de test (20) et on localise le signal d'écho provenant du premier réflecteur standard (22),
c. on applique la méthode selon la revendication 13,
d. on fait croître le signal d'écho provenant du réflecteur standard (22) qui a été irradié avec le son,
e. on détermine l'amplitude de signal maximale Amax du signal d'écho,
f. on répète les étapes de méthode précédentes sur au moins un second réflecteur standard (22),
g. on détermine un facteur de gain dépendant du temps pour la combinaison de la sonde de test à alignement phasé 24 utilisée, du matériau du corps de test 20, et de l'angle d'insonification Θ.
